# EUROPÄISCHE PATENTSCHRIFT

(11) **EP 2 732 177 B1**
(45) Veröffentlichungstag und Bekanntmachung des Hinweises auf die Patenterteilung: **01.04.2015**
(21) Anmeldenummer: 12745396.7
(22) Anmeldetag: 13.07.2012
(51) Int. Cl.: F16D 47/02

(54) **FORMSCHLUSSKUPPLUNGSBETÄTIGUNGSVORRICHTUNG EINES KRAFTFAHRZEUGGETRIEBES**
FORM-FIT COUPLING ACTUATING DEVICE OF A MOTOR VEHICLE TRANSMISSION
DISPOSITIF D'ACTIONNEMENT D'EMBRAYAGE À COMPLÉMENTARITÉ DE FORME D'UNE TRANSMISSION DE VÉHICULE AUTOMOBILE

(30) Priorität: 13.07.2011 DE 102011107245
(43) Veröffentlichungstag der Anmeldung: 21.05.2014
(73) Patentinhaber: Daimler AG, 70327 Stuttgart (DE)
(72) Erfinder: APPELTAUER, Peter, 70736 Fellbach (DE); SPENGLER, Gerhard, 71131 Jettingen (DE)
(74) Vertreter: JENSEN & SON
(86) Internationale Anmeldenummer: PCT/EP2012/002961
(87) Internationale Veröffentlichungsnummer: WO 2013/007392

(56) Entgegenhaltungen:
- EP-A2- 1 527 937
- DE-A1- 1 600 124
- US-A1- 2004 198 548
- US-A1- 2007 180 940

## Beschreibung

Die Erfindung betrifft eine Formschlusskupplungsbetätigungsvorrichtung eines Kraftfahrzeuggetriebes.

Aus der DE 10 2007 036 100 A1 ist bereits eine Formschlusskupplungsbetätigungsvorrichtung eines Kraftfahrzeuggetriebes zur Schaltung einer Formschlusskupplung, mit einer Betätigungseinheit bekannt.

In der US 2007/180940 A1 wird eine Formschlusskupplungsbetätigungsvorrichtung eines Kraftfahrzeuggetriebes zur Schaltung einer in Reihe zu einer Reibschlusskupplung angeordneten Formschlusskupplung, mit zumindest einer Betätigungseinheit, die wenigstens eine Kulissenbahn aufweist, die dazu vorgesehen ist, zur Betätigung der Formschlusskupplung eine Drehbewegung in eine Linearbewegung mechanisch umzusetzen, vorgeschlagen.

Der Erfindung liegt insbesondere die Aufgabe zugrunde, eine platzsparende Betätigung der Formschlusskupplung bereitzustellen, durch die Schleppverluste reduziert werden können. Diese Aufgabe wird gemäß der Erfindung durch die Merkmale des Anspruchs 1 gelöst. Weitere Ausgestaltungen ergeben sich aus den Unteransprüchen.

Erfindungsgemäß weist die Betätigungseinheit ein Hohlrad auf, das die Kulissenbahn zumindest teilweise umfasst. Dadurch kann eine besonders vorteilhafte Betätigung der Formschlusskupplung realisiert werden. Unter "umfassen" soll in diesem Zusammenhang insbesondere verstanden werden, dass das Hohlrad die Kulissenbahn ausbildet und/oder die Kulissenbahn in das Hohlrad eingebracht ist.

Die Kulissenbahn ist auf einem Innenumfang des Hohlrads angeordnet. Dadurch kann ein benötigter Bauraum der Betätigungseinheit weiter reduziert werden. Unter "angeordnet" soll in diesem Zusammenhang insbesondere verstanden werden, dass das Hohlrad die Kulissenbahn auf seiner Innenseite ausbildet und/oder die Kulissenbahn auf die Innenseite des Hohlrads eingebracht ist. Die Formschlusskupplung ist dazu vorgesehen, die Reibschlusskupplung von dem Antriebskraftfluss zu trennen.

Dadurch kann die Formschlusskupplung besonders platzsparend zu- und abgeschaltet werden, wodurch die Reibschlusskupplung zumindest teilweise von einem Kraftfluss entkoppelt werden kann. Eine besonders vorteilhafte Kopplung und Entkopplung der Reibschlusskupplung kann realisiert werden, wodurch Schleppverluste einer offenen Reibschlusskupplung und damit des Kraftfahrzeuggetriebes reduziert werden können. Dadurch können Schaltwege verkürzt werden, wodurch ein benötigter Bauraum für die Betätigungseinheit der Formschlusskupplungsbetätigungsvorrichtung in dem Kraftfahrzeuggetriebe reduziert werden kann. Es kann eine platzsparende Betätigung der Formschlusskupplung bereitgestellt werden, durch die Schleppverluste des Kraftfahrzeuggetriebes reduziert werden können. Unter einer "in Reihe zu einer Reibschlusskupplung angeordneten Formschlusskupplung" soll eine Formschlusskupplung verstanden werden, die dazu vorgesehen ist, zumindest einen Teil der Reibschlusskupplung von dem Kraftfluss zu entkoppeln, insbesondere eine Formschlusskupplung, die in einem Kraftfluss vor der Reibschlusskupplung angeordnet ist. Die in Reihe zu der Reibschlusskupplung angeordnete Formschlusskupplung ist vorzugsweise dazu vorgesehen, den Kraftfluss zumindest durch einen Teil der Reibschlusskupplung zu verhindern. Unter einem "Kraftfluss" soll insbesondere ein Antriebskraftfluss verstanden werden, der von einer Antriebsmaschine eines die Formschlusskupplungsbetätigungsvorrichtung aufweisenden Kraftfahrzeugs resultiert und/oder bereitgestellt wird. Vorzugsweise ist der Kraftfluss zum Antrieb von Antriebsrädern des Kraftfahrzeugs vorgesehen. Der Kraftfluss unterscheidet sich vorteilhafterweise von einem Betätigungskraftfluss, der von der Betätigungseinheit bereitgestellt wird. Unter einer "Kulissenbahn" soll insbesondere eine Bahn zur zumindest einseitigen, vorzugsweise beidseitigen, Zwangsführung eines Schaltelements verstanden werden. Die Kulissenbahn ist vorzugsweise in Form eines Stegs, in Form eines Schlitzes, in Form einer Nut und/oder in Form eines Gewindes ausgebildet. Das Schaltelement in vorzugsweise in Form eines den Steg umgreifenden Schaltschuhs, in Form eines in den Schlitz eingreifenden Pins, in Form eines in der Nut geführten Pins und/oder in Form eines durch das Gewinde geführten Pins ausgebildet. Vorteilhafterweise setzt die Kulissenbahn eine Drehbewegung in eine axiale Verstellkraft um, die zur Schaltung, d.h. zur Öffnung und zur Schließung, der Formschlusskupplung vorgesehen ist. Unter "vorgesehen" soll insbesondere speziell ausgelegt, ausgestattet und/oder angeordnet verstanden werden.

Weiter wird vorgeschlagen, dass die Formschlusskupplungsbetätigungsvorrichtung eine Synchronisiereinheit aufweist, die zu einer Synchronisierung der Formschlusskupplung vorgesehen ist, wodurch ein Komfort erhöht werden kann.

Ferner wird vorgeschlagen, dass die Formschlusskupplungsbetätigungsvorrichtung eine Aktuatoreinheit aufweist, die dazu vorgesehen ist, zur Betätigung der Formschlusskupplung das Hohlrad mit der Drehbewegung zu beaufschlagen. Dadurch kann das Hohlrad besonders vorteilhaft angetrieben werden, wodurch die Formschlusskupplung besonders vorteilhaft betätigt und damit die Reibschlusskupplung besonders vorteilhaft entkoppelt und gekoppelt werden kann. Vorzugsweise ist die Aktuatoreinheit als eine externe Aktuatoreinheit ausgebildet. Vorzugsweise ist die Aktuatoreinheit zumindest teilweise außerhalb des Kraftfahrzeuggetriebes angeordnet und/oder unabhängig von einer Betätigung der Reibschlusskupplung ausgebildet. Unter "zumindest teilweise" soll in diesem Zusammenhang insbesondere verstanden werden, dass zumindest ein Antrieb der Aktuatoreinheit außerhalb des Kraftfahrzeuggetriebes angeordnet ist. Unter "außerhalb des Kraftfahrzeuggetriebes" soll insbesondere außerhalb eines Bereichs eines Getriebegehäuses des Kraftfahrzeuggetriebes, in dem sich die drehmoment- und drehzahlführenden Teile befinden, verstanden werden. Die Aktuatoreinheit befindet sich vorzugsweise in einem Bereich des Getriebegehäuses, in dem eine hydraulische Steuerungseinheit untergebracht ist und der durch eine Ölwanne abgeschlossen wird. Die Aktuatoreinheit kann auch durch eine separat am Getriebegehäuse angebrachte Ölwanne oder einen Deckel abgedichtet werden. Unter "unabhängig" soll in diesem Zusammenhang insbesondere verstanden werden, dass die Formschlusskupplung und die Reibschlusskupplung unabhängig voneinander betätigt und/oder gesteuert werden können. Die Betätigung der Formschlusskupplung und die Betätigung der Reibschlusskupplung sind vorzugsweise separat voneinander.

Insbesondere ist es vorteilhaft, wenn die Aktuatoreinheit mit der Betätigungseinheit und gleichzeitig mit einer weiteren zur Betätigung einer weiteren Formschlusskupplung vorgesehenen Betätigungseinheit antriebstechnisch verbunden ist. Dadurch können gleichzeitig zwei Formschlusskupplungen des Kraftfahrzeuggetriebes betätigt werden, wodurch Kosten gespart werden können. Unter "antriebstechnisch" soll insbesondere verstanden werden, dass das Hohlrad der Betätigungseinheit und ein Hohlrad der weiteren Betätigungseinheit gleichzeitig in Wirkverbindung mit der Aktuatoreinheit stehen. Vorzugsweise wird das Hohlrad der Betätigungseinheit und das Hohlrad der weiteren Betätigungseinheit mittels der Aktuatoreinheit gemeinsam mit der Drehbewegung beaufschlagt und damit angetrieben.

Ferner ist es vorteilhaft, wenn die Formschlusskupplung als eine Klauenkupplung ausgebildet ist. Dadurch kann eine besonders vorteilhafte Formschlusskupplung gefunden werden.

Außerdem wird ein Verfahren zur Schaltung einer in Reihe zu einer Reibschlusskupplung angeordneten Formschlusskupplung mittels einer Formschlusskupplungsbetätigungsvorrichtung, insbesondere mittels einer erfindungsgemäßen Formschlusskupplungsbetätigungsvorrichtung, vorgeschlagen, wobei zur Betätigung der Formschlusskupplung eine Drehbewegung in eine Linearbewegung mechanisch umgesetzt wird, wodurch die Formschlusskupplung besonders platzsparend betätigt und die Reibschlusskupplung entkoppelt werden kann.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: teilweise ein Kraftfahrzeuggetriebe mit einer Formschlusskupplungsbetätigungsvorrichtung teilweise schematisiert dargestellt und
- Fig. 2: eine Innenseite eines Hohlrads der Formschlusskupplungsbetätigungsvorrichtung mit einer Kulissenbahn teilweise schematisiert dargestellt.

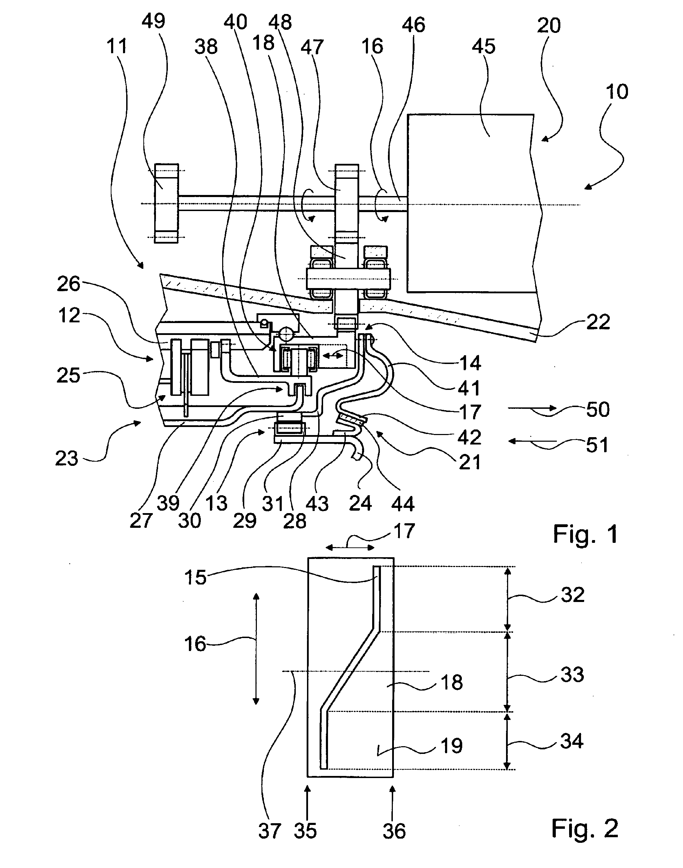

Figur 1 zeigt teilweise ein Kraftfahrzeuggetriebe 11 zur Schaltung von mehreren Getriebegängen. Das Kraftfahrzeuggetriebe 11 ist als ein Automatikgetriebe ausgebildet. Zur Einstellung der Getriebegänge weist das Kraftfahrzeuggetriebe 11 einen nicht näher dargestellten Getrieberadsatz in Planetenbauweise auf. Das Kraftfahrzeuggetriebe 11 weist vier hintereinander angeordnete Planetenradgetriebe auf. Sämtliche Planetenradgetriebe weisen einen Einfachplanetenradsatz auf. Das Kraftfahrzeuggetriebe 11 weist weiter ein ortsfest angeordnetes Getriebegehäuse 22 auf. Zur Schaltung der Getriebegänge und damit der Planetenradgetriebe umfasst das Kraftfahrzeuggetriebe 11 mehrere Koppeleinheiten, wobei lediglich eine Koppeleinheit 23 dargestellt ist. Die Koppeleinheit 23 ist als eine Bremseinheit ausgebildet, die dazu vorgesehen ist, ein drehbares Kopplungselement mit dem Getriebegehäuse 22 wahlweise drehfest zu verbinden oder zu trennen. Das drehbare Kopplungselement ist in diesem Ausführungsbeispiel als ein Hohlrad eines der vier Planetenradgetriebe ausgebildet. Zur Anbindung an das drehbare Kopplungselement weist das Kraftfahrzeuggetriebe 11 ein Anbindungselement 24 auf, das fest mit dem drehbaren Kopplungselement verbunden ist. Natürlich kann das drehbare Kopplungselement auch als ein Sonnenrad und/oder als ein Planetenradträger eines der vier Planetenradgetriebe ausgebildet sein. Grundsätzlich kann die Koppeleinheit 23 auch als eine Kupplungseinheit ausgebildet sein, die dazu vorgesehen ist, zwei drehbar angeordnete Kopplungselemente wahlweise drehfest zu verbinden oder zu trennen. Weiter ist es grundsätzlich denkbar, dass das Kraftfahrzeuggetriebe 11 als ein teilautomatisiertes Getriebe ausgebildet ist.

Die Koppeleinheit 23 ist lastschaltbar ausgebildet. Die Koppeleinheit 23 weist eine Reibschlusskupplung 12 und eine in Reihe zu der Reibschlusskupplung 12 angeordnete Formschlusskupplung 13 auf. Die Formschlusskupplung 13 ist bezüglich eines Kraftflusses vor der Reibschlusskupplung 12 angeordnet. Bei einer geschlossenen Formschlusskupplung 13 und einer geschlossenen Reibschlusskupplung 12 verläuft der Kraftfluss von dem drehbaren Kopplungselement über das Anbindungselement 24 auf die Formschlusskupplung 13 und anschließend von der Formschlusskupplung 13 auf die Reibschlusskupplung 12 und damit auf das Getriebegehäuse 22. Die Formschlusskupplung 13 ist dazu vorgesehen, die Reibschlusskupplung 12 von dem Kraftfluss zu trennen.

Die Reibschlusskupplung 12 weist mehrere Lamellen 25, einen Außenlamellenträger 26 und einen Innenlamellenträger 27 auf. Der Außenlamellenträger 26 ist fest mit dem Getriebegehäuse 22 verbunden. Der Innenlamellenträger 27 ist abkoppelbar. Er ist von dem Anbindungselement 24 und damit von dem Kraftfluss abkoppelbar. Der Innenlamellenträger 27 ist axial verschiebbar. Er ist bezüglich des Außenlamellenträgers 26 axial verschiebbar. Die von dem Außenlamellenträger 26 aufgenommenen Lamellen 25 sind axial verschiebbar und drehfest auf dem Außenlamellenträger 26 angeordnet. Die von dem Innenlamellenträger 27 aufgenommenen Lamellen 25 sind axial verschiebbar und drehfest auf dem Innenlamellenträger 27 angeordnet. Zur Betätigung der Reibschlusskupplung 12 umfasst das Kraftfahrzeuggetriebe 11 eine nicht näher dargestellte Reibschlusskupplungsbetätigungsvorrichtung, die eine hydraulische Aktuatoreinheit aufweist, die zur Betätigung der Reibschlusskupplung 12 vorgesehen ist. Die hydraulische Aktuatoreinheit ist dazu vorgesehen, eine hydraulische Betätigungskraft bereitzustellen, die die Lamellen 25 gegeneinander drückt und dadurch den Außenlamellenträger 26 und den Innenlamellenträger 27 reibschlüssig miteinander verbindet. Die Reibschlusskupplungsbetätigungsvorrichtung und damit die hydraulische Aktuatoreinheit ist innerhalb des Kraftfahrzeuggetriebes 11 angeordnet. Sie ist innerhalb des Getriebegehäuses 22 angeordnet. Die hydraulische Aktuatoreinheit weist einen hydraulisch betätigbaren Kolben auf. Die Reibschlusskupplung 12 ist als eine Lamellenbremse ausgebildet.

Die Formschlusskupplung 13 weist ein erstes Formschlusselement 28 und ein zweites Formschlusselement 29 auf. Das erste Formschlusselement 28 weist eine Formschlusskontur 30 und das zweite Formschlusselement 29 eine Formschlusskontur 31 auf, die korrespondierend zueinander ausgebildet sind. Das erste Formschlusselement 28 ist dreh- und verschiebefest mit dem abkoppelbaren Innenlamellenträger 27 verbunden. Bezüglich des zweiten Formschlusselements 29 ist das erste Formschlusselement 28 axial verschiebbar angeordnet. Das zweite Formschlusselement 29 ist einstückig mit dem Anbindungselement 24 ausgebildet. Das Anbindungselement 24 weist die Formschlusskontur 31 auf. Bei einer geschlossenen Formschlusskupplung 13 greifen die Formschlusskonturen 30, 31 ineinander, wodurch das erste Formschlusselement 28 und das zweite Formschlusselement 29 und damit der Innenlamellenträger 27 und das Anbindungselement 24 formschlüssig miteinander verbunden sind. Bei geschlossener Formschlusskupplung 13 ist die Reibschlusskupplung 12 mit dem Anbindungselement 24 und damit mit dem drehbaren Kopplungselement gekoppelt. Der Innenlamellenträger 27 ist bei geschlossener Formschlusskupplung 13 mit dem Anbindungselement 24 verbunden. Bei geschlossener Formschlusskupplung 13 kann die Koppeleinheit 23 mittels der Reibschlusskupplung 12 geschlossen werden. Die Formschlusskonturen 30, 31 sind jeweils als eine Klauenverzahnung ausgebildet. Die Formschlusskupplung 13 ist als eine Klauenkupplung ausgebildet.

Zur Kopplung und Entkopplung der Reibschlusskupplung 12 weist das Kraftfahrzeuggetriebe 11 eine erfindungsgemäße Formschlusskupplungsbetätigungsvorrichtung 10 auf. Die Formschlusskupplungsbetätigungsvorrichtung 10 ist dazu vorgesehen, die Reibschlusskupplung 12 mittels der Formschlusskupplung 13 wahlweise von dem Anbindungselement 24 zu trennen oder mit dem Anbindungselement 24 zu verbinden. Sie ist dazu vorgesehen, die Reibschlusskupplung 12 mittels der Formschlusskupplung 13 wahlweise von dem Anbindungselement 24 zu entkoppeln oder mit dem Anbindungselement 24 zu koppeln. Die Formschlusskupplungsbetätigungsvorrichtung 10 schaltet die in Reihe zu der Reibschlusskupplung 12 angeordnete Formschlusskupplung 13.

Zur Schaltung der Formschlusskupplung 13 weist die Formschlusskupplungsbetätigungsvorrichtung 10 eine Betätigungseinheit 14 auf. Die Betätigungseinheit 14 ist innerhalb des Kraftfahrzeuggetriebes 11 angeordnet. Sie ist innerhalb des Getriebegehäuses 22 angeordnet. Die Betätigungseinheit 14 umfasst zur Betätigung der Formschlusskupplung 13 eine Kulissenbahn 15, die eine Drehbewegung 16 in eine Linearbewegung 17 mechanisch umsetzt. Die Kulissenbahn 15 setzt eine Drehbewegung 16 in eine axiale Betätigungskraft der Formschlusskupplung 13 um, durch die die Formschlusskupplung 13 geöffnet oder geschlossen wird. Die Kulissenbahn 15 ist als eine Nut ausgebildet. Grundsätzlich kann die Kulissenbahn 15 auch als ein Gewinde ausgebildet sein.

Die Betätigungseinheit 14 weist weiter ein Hohlrad 18 auf, das die Kulissenbahn 15 umfasst. Das Hohlrad 18 bildet die Kulissenbahn 15 aus. Die Kulissenbahn 15 ist auf einem Innenumfang 19 des Hohlrads 18 angeordnet. Sie verläuft auf einer Innenseite des Hohlrads 18. Das Hohlrad 18 weist auf seiner Innenseite die Kulissenbahn 15 auf. Die Kulissenbahn 15 ist als eine Nut in dem Hohlrad 18 ausgebildet. Die Kulissenbahn 15 weist drei Bereiche 32, 33, 34 auf. Die Bereiche 32, 33, 34 weisen jeweils einen gradlinigen Verlauf auf. Der Bereich 32 und der Bereich 34 sind parallel versetzt zueinander angeordnet. Der Bereich 34 verläuft an einem axialen Ende 35 des Hohlrads 18 und der Bereich 32 verläuft an einem gegenüberliegenden axialen Ende 36 des Hohlrads 18. Der Bereich 33 verbindet die zwei Bereiche 32, 34 miteinander. Der Bereich 33 verläuft schräg von dem Ende 35 zu dem Ende 36. Bezüglich einer Rotationsachse 37 des Hohlrads 18 weisen die Bereiche 32, 34 einen senkrechten Verlauf und der Bereich 33 einen schrägen Verlauf auf (vgl. Fig. 2). Der schräg verlaufende Bereich 33 der Kulissenbahn 15 wandelt die Drehbewegung 16 in die Linearbewegung 17 um.

Zur Verschiebung des ersten Formschlusselements 28 und damit des Innenlamellenträgers 27 weist die Betätigungseinheit 14 ein Schaltelement 38 auf. Das Schaltelement 38 ist axial verschiebbar und drehfest mit dem Außenlamellenträger 26 verbunden. Das Schaltelement 38 ist axial verschiebefest und drehbar mit dem Innenlamellenträger 27 verbunden. Es ist bezüglich des Außenlamellenträgers 26 axial beweglich und bezüglich des Innenlamellenträgers 27 axial fest angeordnet. Das Schaltelement 38 ist in eine axiale Richtung formschlüssig mit dem Innenlamellenträger 27 verbunden. Der Innenlamellenträger 27 greift in das Schaltelement 38 ein. Das Schaltelement 38 weist einen schuhförmigen Bereich 39 auf, mit dem es ein axiales Ende des Innenlamellenträgers 27 umgreift. Das Schaltelement 38 ist mit seinem schuhförmigen Bereich 39 in die axiale Richtung formschlüssig mit dem Innenlamellenträger 27 verbunden. Das in die Kulissenbahn 15 eingreifende Schaltelement 38 wird durch eine Führung in dem Bereich 33 linear verschoben.

Das Schaltelement 38 greift teilweise in das Hohlrad 18 ein. Es greift in die Kulissenbahn 15 ein. Das Schaltelement 38 weist einen pinförmigen Bereich 40 auf, mit dem es in die Kulissenbahn 15 eingreift. Das Schaltelement 38 weist in dem pinförmigen Bereich 40 einen Stift auf, der in die Kulissenbahn 15 eingreift. Das Hohlrad 18 führt das Schaltelement 38 entlang der Kulissenbahn 15. Die Kulissenbahn 15 wandelt die Drehbewegung 16 des Hohlrads 18 in die Linearbewegung 17 des eingreifenden Schaltelements 38 um. Das Schaltelement 38 wird von der Kulissenbahn 15 zwangsgeführt. Grundsätzlich kann auch das Hohlrad 18 den pinförmigen Bereich 40 und das Schaltelement 38 die Kulissenbahn 15, in die das Hohlrad 18 mit dem pinförmigen Bereich 40 eingreift, aufweisen.

Zur Synchronisierung der Formschlusskupplung 13 weist die Formschlusskupplungsbetätigungsvorrichtung 10 eine Synchronisiereinheit 21 auf. Die Synchronisiereinheit 21 weist ein Federelement 41, ein erstes Synchronisierungselement 42, ein zweites Synchronisierungselement 43 und einen Reibbelag 44 auf. Die Synchronisierungselemente 42, 43 bilden jeweils eine Schrägfläche aus, die zur Synchronisierung aufeinanderliegen, wodurch durch Reibung eine Drehzahlanpassung zwischen den Synchronisierungselementen 42, 43 stattfindet. Zur Verbesserung der Synchronisierung ist der Reibbelag 44 zwischen den beiden Synchronisierungselementen 42, 43 angeordnet. Er ist zwischen den Schrägflächen angeordnet. Der Reibbelag 44 ist fest mit dem zweiten Synchronisierungselement 43 verbunden. Das Federelement 41 und das erste Synchronisierungselement 42 sind einstückig miteinander ausgebildet. Das Federelement 41 weist die Schrägfläche auf, die dazu vorgesehen ist, zur Synchronisierung der Formschlusskupplung 13 die Schrägfläche des zweiten Synchronisierungselements 43 flächig zu kontaktieren. Das Federelement 41 ist dreh- und verschiebefest mit dem ersten Formschlusselement 28 verbunden. Es ist formschlüssig mit dem ersten Formschlusselement 28 verbunden. Das Federelement 41, das erste Formschlusselement 28 und der Innenlamellenträger 27 sind fest miteinander verbunden. Das zweite Synchronisierungselement 43 ist dreh- und verschiebefest mit dem Anbindungselement 24 verbunden.

Zur Beaufschlagung des Hohlrads 18 mit der Drehbewegung 16 weist die Formschlusskupplungsbetätigungsvorrichtung 10 eine Aktuatoreinheit 20 auf. Die Aktuatoreinheit 20 ist dazu vorgesehen, zur Betätigung der Formschlusskupplung 13 das Hohlrad 18 mit der Drehbewegung 16 zu beaufschlagen. Die Aktuatoreinheit 20 ist dazu vorgesehen, zur Schaltung der Formschlusskupplung 13 das Hohlrad 18 anzutreiben.

Die Aktuatoreinheit 20 weist einen Antrieb 45, eine Antriebswelle 46, ein Antriebsrad 47 und ein Zwischenrad 48 auf. Der Antrieb 45 treibt mittels der Antriebswelle 46 das Antriebsrad 47 an. Er beaufschlagt das Antriebsrad 47 mit der Drehbewegung 16. Die Antriebswelle 46 ist fest mit dem Antriebsrad 47 verbunden. Das Antriebsrad 47, das Zwischenrad 48 und das Hohlrad 18 stehen miteinander in Wirkverbindung. Sie kämmen miteinander. Das Hohlrad 18 steht über das Zwischenrad 48 in Wirkverbindung mit dem Antriebsrad 47. Der Antrieb 45 treibt somit das Hohlrad 18 an und betätigt damit die Formschlusskupplung 13. Das Antriebsrad 47, das Zwischenrad 48 und das Hohlrad 18 sind jeweils als ein Zahnrad ausgebildet. Sie weisen jeweils eine Außenverzahnung auf. Das Hohlrad 18 kämmt mit dem Zwischenrad 48 und das Zwischenrad 48 mit dem Antriebsrad 47. Der Antrieb 45 ist als ein Elektromotor ausgebildet.

Die Aktuatoreinheit 20 ist mit der Betätigungseinheit 14 und gleichzeitig mit einer weiteren zur Betätigung einer weiteren Formschlusskupplung vorgesehenen Betätigungseinheit antriebstechnisch verbunden. Der Übersicht halber ist die weitere Betätigungseinheit nicht dargestellt. Die weitere Betätigungseinheit ist analog zu der Betätigungseinheit 14 ausgebildet, wobei die weitere Betätigungseinheit einer anderen Koppeleinheit zugeordnet ist. Die andere Koppeleinheit ist analog zu der Koppeleinheit 23 ausgebildet. Die andere Koppeleinheit ist ebenfalls als eine Bremseinheit ausgebildet, die dazu vorgesehen ist, ein drehbares Kopplungselement mit dem Getriebegehäuse 22 wahlweise drehfest zu verbinden oder zu trennen, wobei dieses drehbare Kopplungselement in diesem Ausführungsbeispiel als ein Sonnenrad ausgebildet ist.

Zur gleichzeitigen antriebstechnischen Verbindung weist die Aktuatoreinheit 20 ein zweites Antriebsrad 49 auf, das fest mit der Antriebswelle 46 verbunden ist. Die Antriebswelle 46 ist fest mit beiden Antriebsrädern 47, 49 verbunden. Der Antrieb 45 treibt mittels der Antriebswelle 46 das Antriebsrad 47 und gleichzeitig das Antriebsrad 49 an. Die Aktuatoreinheit 20 weist weiter ein nicht näher dargestelltes zweites Zwischenrad auf, das mit dem zweiten Antriebsrad 49 und einem Hohlrad der weiteren Betätigungseinheit kämmt. Eine Kulissenbahn der weiteren Betätigungseinheit unterscheidet sich dabei von der Kulissenbahn 15. Sie sind in Abhängigkeit eines Getriebeaufbaus aufeinander abgestimmt. Die Koppeleinheit 23 und die andere Koppeleinheit weisen somit eine gemeinsame Aktuatoreinheit 20 und damit einen gemeinsamen Antrieb 45 auf. Der Antrieb 45 treibt gleichzeitig zwei Hohlräder 18 von verschiedenen Betätigungseinheiten 14 an. Er betätigt somit zwei Formschlusskupplungen 13 parallel. Grundsätzlich kann auf eine gemeinsame bzw. gleichzeitige antriebstechnische Verbindung verzichtet werden, wodurch die Aktuatoreinheit 20 lediglich mit der Betätigungseinheit 14 antriebstechnisch verbunden ist.

Die Formschlusskupplungsbetätigungsvorrichtung 10 und die Reibschlusskupplungsbetätigungsvorrichtung sind separat voneinander ausgebildet. Die Aktuatoreinheit 20 ist separat zu der hydraulischen Aktuatoreinheit ausgebildet. Die Aktuatoreinheit 20 und die hydraulische Aktuatoreinheit sind unabhängig voneinander ansteuerbar. Die Aktuatoreinheit 20 ist unabhängig von der zur Betätigung der Reibschlusskupplung 12 vorgesehenen hydraulischen Aktuatoreinheit. Eine Betätigung der Formschlusskupplung 13 ist bewegungstechnisch und/oder mechanisch von einer Betätigung der Reibschlusskupplung 12 entkoppelt. Die Aktuatoreinheit 20 ist bewegungstechnisch und/oder mechanisch unabhängig von der hydraulischen Aktuatoreinheit. Grundsätzlich kann das Kraftfahrzeuggetriebe 11 zumindest eine weitere erfindungsgemäße Formschlusskupplungsbetätigungsvorrichtung aufweisen, wobei ein Antrieb der weiteren Formschlusskupplungsbetätigungsvorrichtung zur Betätigung einer Formschlusskupplung oder zur Betätigung von zumindest zwei Formschlusskupplungen vorgesehen ist.

Die Formschlusskupplungsbetätigungsvorrichtung 10 ist teilweise außerhalb des Kraftfahrzeuggetriebes 11 angeordnet. Die Aktuatoreinheit 20 ist teilweise außerhalb des Kraftfahrzeuggetriebes 11 angeordnet. Sie ist teilweise außerhalb des Getriebegehäuses 22 angeordnet. Der Antrieb 45, die Antriebswelle 46, das Antriebsrad 47 und das Antriebsrad 49 sind außerhalb des Getriebegehäuses 22 angeordnet. Das Zwischenrad 48 ist teilweise außerhalb und teilweise innerhalb des Getriebegehäuses 22 angeordnet. Das Zwischenrad 48 greift, um mit dem Hohlrad 18 zu kämmen, durch das Getriebegehäuse 22 hindurch.

In einem Betriebszustand, in dem die Reibschlusskupplung 12 entkoppelt werden soll, wird die Formschlusskupplung 13 geöffnet, wodurch der Innenlamellenträger 27 von dem Anbindungselement 24 getrennt wird. Die Formschlusskupplung 13 wird ausgehend von einem geschlossenen Zustand (vgl. Fig. 1) in einen geöffneten Zustand (nicht dargestellt) geschaltet. Zur Schaltung der Formschlusskupplung 13 steuert eine nicht näher dargestellte Steuer- und Regeleinheit den Antrieb 45 der Aktuatoreinheit 20 entsprechend an, wodurch der Antrieb 45 gleichzeitig das Antriebsrad 47 und das Antriebsrad 49 mit der Drehbewegung 16 beaufschlagt und damit antreibt. Der Antrieb 45 beaufschlagt über das Zwischenrad 48 das Hohlrad 18 der Betätigungseinheit 14 und über das nicht näher dargestellte Zwischenrad gleichzeitig das nicht näher dargestellte Hohlrad der weiteren Betätigungseinheit mit der Drehbewegung 16. Zur Betätigung und damit zur Öffnung der Formschlusskupplung 13 wird die Drehbewegung 16 des Hohlrads 18 in die Linearbewegung 17 des Schaltelements 38 mechanisch umgesetzt. Das mit der Drehbewegung 16 beaufschlagte Hohlrad 18 bewegt zur Öffnung der Formschlusskupplung 13 das in die Kulissenbahn 15 eingreifende Schaltelement 38 linear, d.h. bezüglich der Rotationsachse 37 des Hohlrads 18 axial in eine Öffnungsrichtung 50. Das Schaltelement 38 schiebt dadurch den Innenlamellenträger 27, das erste Formschlusselement 28 und das einstückig mit dem ersten Synchronisierungselement 42 ausgebildete Federelement 41, die fest miteinander verbunden sind, in die Öffnungsrichtung 50, wodurch die Formschlusskontur 30 aus der Formschlusskontur 31 geschoben wird und ein Formschluss zwischen dem Innenlamellenträger 27 und dem Anbindungselement 24 aufgelöst wird. Dadurch wird der Innenlamellenträger 27 und damit die Reibschlusskupplung 12 von dem Anbindungselement 24 und somit von dem Kraftfluss entkoppelt. Durch die gleichzeitige antriebstechnische Verbindung der Aktuatoreinheit 20 mit der Betätigungseinheit 14 und der weiteren Betätigungseinheit wird die weitere Formschlusskupplung gleichzeitig betätigt, wobei durch die aufeinander abgestimmten Kulissenbahnen 15 der zwei unterschiedlichen Betätigungseinheiten 14 die weitere Formschlusskupplung beispielsweise geschlossen wird.

In einem Betriebszustand, in dem die Reibschlusskupplung 12 angekoppelt werden soll, wird die Formschlusskupplung 13 geschlossen, wodurch der Innenlamellenträger 27 mit dem Anbindungselement 24 formschlüssig verbunden wird. Die Formschlusskupplung 13 wird ausgehend von dem geöffneten Zustand in den geschlossenen Zustand geschaltet. Zur Schaltung der Formschlusskupplung 13 steuert die Steuer- und Regeleinheit den Antrieb 45 der Aktuatoreinheit 20 entsprechend an, wodurch der Antrieb 45 gleichzeitig das Antriebsrad 47 und das Antriebsrad 49 mit der Drehbewegung 16 beaufschlagt und damit antreibt. Zur Betätigung und damit zur Schließung der Formschlusskupplung 13 wird die Drehbewegung 16 des Hohlrads 18 in die Linearbewegung 17 des Schaltelements 38 mechanisch umgesetzt. Das mit der Drehbewegung 16 beaufschlagte Hohlrad 18 bewegt zur Schließung der Formschlusskupplung 13 das in die Kulissenbahn 15 eingreifende Schaltelement 38 linear in eine Schließrichtung 51. Die Schließrichtung 51 ist dabei entgegengesetzt zu der Öffnungsrichtung 50 ausgerichtet. Das Schaltelement 38 schiebt dadurch den Innenlamellenträger 27, das erste Formschlusselement 28 und das einstückig mit dem ersten Synchronisierungselement 42 ausgebildete Federelement 41 in die Schließrichtung 51, wodurch zuerst das Federelement 41 mit seiner Schrägfläche den Reibbelag 44 und damit das zweite Synchronisierungselement 43 flächig kontaktiert. Dadurch wird eine Drehzahl des ersten Formschlusselements 28 und damit des Innenlamellenträgers 27 an eine Drehzahl des Anbindungselements 24 angepasst. Durch weiteres Verschieben des Schaltelements 38 in die Schließrichtung 51 wird bei Gleichlauf die Formschlusskontur 30 in die Formschlusskontur 31 geschoben und ein Formschluss zwischen dem Innenlamellenträger 27 und dem Anbindungselement 24 hergestellt. Dadurch wird der Innenlamellenträger 27 und damit die Reibschlusskupplung 12 an das Anbindungselement 24 und somit an den Kraftfluss gekoppelt. Die Koppeleinheit 23 kann nun mittels der Reibschlusskupplung 12 unter Last geschaltet werden. Durch die gleichzeitige antriebstechnische Verbindung der Aktuatoreinheit 20 mit der Betätigungseinheit 14 und der weiteren Betätigungseinheit wird die weitere Formschlusskupplung gleichzeitig betätigt, wobei durch die aufeinander abgestimmten Kulissenbahnen 15 der zwei unterschiedlichen Betätigungseinheiten 14 beispielsweise die weitere Formschlusskupplung geöffnet wird.

## Patentansprüche

1. Formschlusskupplungsbetätigungsvorrichtung eines Kraftfahrzeuggetriebes (11) zur Schaltung einer in Reihe zu einer Reibschlusskupplung (12) angeordneten Formschlusskupplung (13), mit zumindest einer Betätigungseinheit (14), die wenigstens eine Kulissenbahn (15) aufweist, die dazu vorgesehen ist, zur Betätigung der Formschlusskupplung (13) eine Drehbewegung (16) in eine Linearbewegung (17) mechanisch umzusetzen,
**dadurch gekennzeichnet, dass**
die Betätigungseinheit (14) ein Hohlrad (18) aufweist und die Kulissenbahn (15) auf einem Innenumfang (19) des Hohlrads (18) angeordnet ist, und dass die Formschlusskupplung (13) dazu vorgesehen ist, die Reibschlusskupplung (12) von dem Antriebskraftfluss zu trennen.

2. Formschlusskupplungsbetätigungsvorrichtung nach Anspruch 1,
**dadurch gekennzeichnet, dass**
die Formschlusskupplung (13) bezüglich eines Antriebskraftflusses vor der Reibschlusskupplung (12) angeordnet ist.

3. Formschlusskupplungsbetätigungsvorrichtung nach einem der vorhergehenden Ansprüche,
gekennzeichnet durch
eine Synchronisiereinheit (21), die zu einer Synchronisierung der Formschlusskupplung (13) vorgesehen ist.

4. Formschlusskupplungsbetätigungsvorrichtung zumindest nach Anspruch 2,
gekennzeichnet durch
eine Aktuatoreinheit (20), die dazu vorgesehen ist, zur Betätigung der Formschlusskupplung (13) das Hohlrad (18) mit der Drehbewegung (16) zu beaufschlagen.

5. Formschlusskupplungsbetätigungsvorrichtung nach Anspruch 4,
**dadurch gekennzeichnet, dass**
die Aktuatoreinheit (20) mit der Betätigungseinheit (14) und gleichzeitig mit einer weiteren zur Betätigung einer weiteren Formschlusskupplung vorgesehenen Betätigungseinheit antriebstechnisch verbunden ist.

6. Formschlusskupplungsbetätigungsvorrichtung nach einem der vorhergehenden Ansprüche,
**dadurch gekennzeichnet, dass**
die Formschlusskupplung (13) als eine Klauenkupplung ausgebildet ist.

7. Formschlusskupplungsbetätigungsvorrichtung nach einem der vorhergehenden Ansprüche,
**dadurch gekennzeichnet, dass**
die Reibschlusskupplung (12) einen Innenlamellenträger (27) aufweist und die Formschlusskupplung (13) ein erstes Formschlusselement (28) aufweist, wobei das erste Formschlusselement (28) dreh- und verschiebefest mit dem Innenlamellenträger (27) verbunden ist.

## Claims

1. Positive clutch actuating device of a motor vehicle transmission (11) for shifting a positive clutch (13) which is arranged in series with a friction clutch (12), having at least one actuating unit (14) which has at least one gate track (15) that is designed to convert a rotary movement (16) into a linear movement (17) in order to actuate the positive clutch (13),
**characterised in that**
the actuating unit (14) has a ring gear (18), and the gate track (15) is arranged on an inner periphery (19) of the ring gear (18), and
the positive clutch (13) is provided to separate the friction clutch (12) from the driving force flow.

2. Positive clutch actuating device according to claim 1,
**characterised in that**
the positive clutch (13) is arranged before the friction clutch (12) with respect to a driving force flow.

3. Positive clutch actuating device according to one of the preceding claims,
**characterised by**
a synchronisation unit (21) which is provided to synchronise the positive clutch (13).

4. Positive clutch actuating device at least according to claim 2,
**characterised by**
an actuator unit (20) which is provided to apply the rotary movement (16) to the ring gear (18) in order to actuate the positive clutch (13).

5. Positive clutch actuating device according to claim 4,
**characterised in that**
the actuator unit (20) is connected in terms of drive to the actuating unit (14) and simultaneously to a further actuating unit provided to actuate a further positive clutch.

6. Positive clutch actuating device according to one of the preceding claims,
**characterised in that**
the positive clutch (13) is designed as a jaw clutch.

7. Positive clutch actuating device according to one of the preceding claims,
**characterised in that**
the friction clutch (12) has an inner lamella carrier (27) and the positive clutch (13) has a first positive element (28), wherein the first positive element (28) is connected securely in terms of rotation and displacement to the inner lamella carrier (27).

## Revendications

1. Dispositif d'actionnement d'embrayage craboté d'une transmission (11) de véhicule automobile destiné à enclencher un embrayage à crabot (13) disposé en ligne par rapport à un embrayage à friction (12), doté d'au moins une unité d'actionnement (14), qui présente au moins une piste à coulisse (15) destinée à convertir mécaniquement un mouvement rotatif (16) en un mouvement linéaire (17) pour actionner l'embrayage à crabot (13), **caractérisé en ce que** l'unité d'actionnement (14) présente une couronne (18) et la piste à coulisse (15) est disposée sur une circonférence intérieure (19) de la couronne (18) et **en ce que** l'embrayage à crabot (13) est destiné à séparer l'embrayage à friction (12) du flux de force d'entraînement.

2. Dispositif d'actionnement d'embrayage craboté selon la revendication 1, **caractérisé en ce que** l'embrayage à crabot (13) est disposé en amont de l'embrayage à friction (12) par rapport au flux de force d'entraînement.

3. Dispositif d'actionnement d'embrayage craboté selon l'une quelconque des revendications précédentes, **caractérisé en ce qu'**une unité de synchronisation (21) est destinée à une synchronisation de l'embrayage à crabot (13).

4. Dispositif d'actionnement d'embrayage craboté au moins selon la revendication 2, **caractérisé par** une unité d'actionneur (20) qui est destinée à alimenter la couronne creuse (18) en mouvement rotatif pour actionner l'embrayage à crabot (13).

5. Dispositif d'actionnement d'embrayage craboté selon la revendication 4, **caractérisé en ce que** l'unité d'actionneur (20) est reliée par technique d'entraînement à l'unité d'actionnement (14) et simultanément à une autre unité d'actionnement pour actionner un autre embrayage à crabot.

6. Dispositif d'actionnement d'embrayage craboté selon l'une quelconque des revendications précédentes, **caractérisé en ce que** l'embrayage à crabot (13) est conçu comme un embrayage à griffes.

7. Dispositif d'actionnement d'embrayage craboté selon l'une quelconque des revendications précédentes, **caractérisé en ce que** l'embrayage à friction (12) présente un support de lamelle intérieur (27) et l'embrayage à crabot (13) présente un premier élément craboté (26), ledit premier élément craboté (28) étant relié solidaire en rotation et en déplacement au support de lamelle intérieur (27).
